# EUROPÄISCHE PATENTSCHRIFT

(11) **EP 2 626 138 B1**
(45) Veröffentlichungstag und Bekanntmachung des Hinweises auf die Patenterteilung: **25.06.2014**
(21) Anmeldenummer: 12007586.6
(22) Anmeldetag: 08.11.2012
(51) Int. Cl.: B04B 7/06, E05B 47/00, E05C 5/00, E05B 17/00, F16P 3/08

(54) **Deckelschloss**
Lid lock
Fermeture de couvercle

(30) Priorität: 03.02.2012 DE 202012001077 U
(43) Veröffentlichungstag der Anmeldung: 14.08.2013
(73) Patentinhaber: Sigma Laborzentrifugen GmbH, 37520 Osterode/Harz (DE)
(72) Erfinder: Sobota, Oliver, D-37431 Bad Lauterberg (DE)
(74) Vertreter: Sobisch, Peter

(56) Entgegenhaltungen:
- EP-A1- 2 336 628
- DE-A1- 10 017 314
- DE-C1- 19 629 361
- US-A- 1 264 814
- US-A- 3 561 802
- US-A1- 2008 220 958
- US-A1- 2008 305 938
- US-B1- 6 601 882

## Beschreibung

Die Erfindung bezieht sich auf ein Deckelschloss für eine Laborzentrifuge entsprechend dem Oberbegriff des Anspruchs 1.

Von dem mit hohen Drehzahlen betriebenen, innerhalb eines mit einem Deckel verschlossenen Gehäuse gelagerten Rotor einer Laborzentrifuge geht ein großes Risiko für die unmittelbare Umgebung aus, da im Versagensfall eine beträchtliche Energie freigesetzt wird, die primär durch das Gehäuse aufgenommen werden muss. Bei der Konzeption des den Deckel in der Schließstellung sichernden Deckelschlosses muss dem Rechnung getragen werden, wobei insbesondere auch unter Betriebsbedingungen, die durch Vibrationen gekennzeichnet sein können, die Schließstellung sicher aufrechterhalten werden muss. Derartige Deckelschlösser sind in vielfältiger Form bekannt und werden regelmäßig mittels eines elektrischen Antriebs zwischen der Öffnungs- und der Schließstellung geschaltet.

Aus der DE 100 17 314 A1 ist ein Deckelschloss für eine Laborzentrifuge bekannt, das aus zwei , innenseitig an dem Deckel befestigten Ösen und einer Anordnung von innerhalb des Gehäuses gelagerten Sperrriegeln besteht, die zwischen einer Schließstellung, in der sie mit den Ösen im Eingriff stehen und einer Öffnungsstellung, in der der Eingriff gelöst ist, mittels eines bodenseitig bezüglich des Gehäuses angeordneten Antriebes unter Zwischenanordnung eines Hebelsystems bewegbar angeordnet sind. Dieses Hebelsystem besteht aus einem motorseitigen Kurbeltrieb, dessen Pleuelstange über ein Kniegelenk mit einem Führungsteil in Verbindung steht, an dem die beiden Sperrhebel angelenkt sind, dessen vertikale Bewegung somit in Schwenkbewegungen zwischen der Öffnungs- und der Schließstellung umsetzend. Zur Darstellung einer Notentriegelung ist die genannte Pleuelstange aus zwei gelenkig miteinander verbundenen Teilen zusammengesetzt, wobei mittels einer an dem Gelenk angesetzten Schnur im Störungsfall eine manuelle Entriegelung des Schlosses auslösbar ist. Mit dieser Ausgestaltung soll eine einfache Notentriegelung des Schlosses erreichbar sein. Die Schaltmechanik dieses Deckelschlosses gestaltet sich jedoch vergleichsweise kompliziert und es ist diese innerhalb des Gehäuses der Laborzentrifuge zum Teil offen, dass heißt nicht in einem besonderen Gehäuse angordnet. Sie ist somit in einem Störfall als nur bedingt geschützt anzusehen.

Aus der DE 196 29 361 C1 ist ein Deckelschloss für eine Laborzentrifuge bekannt, welches aus einem an der Innenseite des Deckels angeordneten, an seinem unteren Ende in einer Öse endenden Sperrstück und einer mit dem Gehäuse der Zentrifuge in Verbindung stehenden Anordnung von zwei um eine sich senkrecht zu der Ebene der Öse erstreckende gemeinsame Achse gegenläufig drehbaren Sperrhaken besteht, die zwischen einer Schließstellung, in der sie mit der Öse im Eingriff stehen und einer Öffnungsstellung, in der ein Eingriff mit der Öse gelöst ist, schwenkbar angeordnet sind. Die die Sperrhaken tragende Achse ist mittels einer Motor-Getriebe-Einheit über eine Spindelwelle in Richtung auf den Deckel hin verschiebbar ist, so dass in Verbindung mit gehäusefest angeordneten Führungsbolzen, die mit Schlitzen der Sperrhaken im Eingriff stehen, eine hinsichtlich einer Mittelebene zwangsgeführte symmetrische Schwenkbewegung beider Sperrhaken zwischen der Schließ- und der Öffnungsstellung darstellbar ist. Um auch im stromlosen Zustand der Motor-Getriebe-Einheit den Deckel öffnen zu können, ist ein federkraftgesicherter Sperrhebel vorgesehen, nach dessen Lösung die genannte Einheit verschiebbar ist und ein manuelles Öffnen des Deckels ermöglicht. Durch diese Ausgestaltung soll ein Deckelschloss bereitgestellt werden, welches sich bei hoher Verschlußsicherheit durch geringe manuelle Schließkräfte, und aufgrund der Zwangsführung der Sperrhaken durch einen sicheren Schließvorgang auszeichnet. Die Schaltmechanik auch dieses Deckel-chlosses ist im Schadensfall unmittelbar dem Einfluss eines beschädigten Rotors ausgesetzt.

Schließlich ist aus dem Dokument EP 2 236 628 A1 ein anderes vergleichbares Deckelschloss bekannt, bei welchem ein einzelner, gehäuseseitig gelagerter Verriegelungshaken vorgesehen ist, der in der Schließstellung mit einem in der Deckelstruktur angeordneten Schlitz formschlüssig im Eingriff steht. Zwischen einem Antrieb und dem Verriegelungshaken ist durch ein Hebelsystem sichergestellt, dass sowohl im Schließzustand als auch im Öffnungszustand eine Selbstblockierung dargestellt ist, so dass auch unter ungünstigen Betriebsbedingungen wie z. B. starken Vibrationen eine stabile Schaltposition gegeben ist. Ein weiteres vergleichbares, durch einen gehäuseseitig gelagerten Fanghaken, der in der Schließstellung mit einer Kante der Deckelstruktur in formschlüssigem Eingriff steht, gekennzeichnetes Deckelschloss ist aus dem Dokument DE 100 15 010 A1 bekannt.

Es ist vor diesem Hintergrund die Aufgabe der Erfindung, ein Deckelschloss der eingangs bezeichneten Art zu konzipieren, welches sich bei einfachem konstruktivem Aufbau durch eine weiter verbesserte Betriebssicherheit auszeichnet. Gelöst ist diese Aufgabe bei einem solchen Deckelschloss durch die Merkmale des Kennzeichnungsteils des Anspruchs 1.

Erfindungswesentlich ist, dass der die Drehbewegung eines Antriebs in eine Öffnungs- oder Schließbewegung der Verriegelungshebel umsetzende Übertragungsmechanismus in einem Gehäuse angeordnet ist, welches eine Schutzfunktion vor äußeren Einwirkungen vermittelt. Beide Verriegelungshebel sind um eine gemeinsame Achse in einem Bauelement, hier Oberteil genannt, gelagert, welches Oberteil in einer eine Längsführung bildenden Ausnehmung in einer Kulissenplatte verschiebbar gelagert ist. Dies ermöglicht eine raumsparende Bauweise. Die Kulissenplatte ist mit Mitteln zur Darstellung einer synchronen Schwenkbewegung der beiden Verriegelungshebel ausgerüstet, welche Mittel gleichzeitig zur Darstellung der Grenzen der Schwenkbewegung dienen. Das Oberteil vermittelt somit in Verbindung mit der Kulissenplatte eine geradlinige Verschiebebewegung, nämlich in Richtung der genannten Ausnehmung und eine gegenläufige winkelbegrenzte Schwenkbewegung der beiden Verriegelungshebel. Ein ebenfalls in der genannten Ausnehmung geführtes Unterteil, welches mit dem Oberteil unter Zwischenanordnung einer Druckfeder in Verbindung steht, bildet das Bindeglied zu dem Antrieb, wobei die innerhalb des Schlossgehäuses verschiebbar angeordnete Kulissenplatte in der einen Endlage ihres Verschiebeweges unter Kompression der genannten Druckfeder die Schließstellung des Deckelschlosses bildet. Eine Verschiebung der Kulissenplatte tritt ein, sobald die Schwenkbewegung der beiden Verriegelungshebel bei der Überführung in die Schließstellung an dem Ende der diesen zugeordneten Kurvennuten angekommen ist und über den Antrieb eine weitere Drehbewegung generiert wird. Diese weitere Drehbewegung kann somit dazu genutzt werden, eine feste Anlage der Verriegelungshebel in der Schließstellung einzurichten. Diese ist durch eine komprimierte Druckfeder gesichert.

Die Merkmale des Anspruchs 2 sind auf weitere Einzelheiten der zur Darstellung der Schwenkbewegung der Verriegelungshebel bestimmten Kurvenuten gerichtet, Wesentlich ist, dass die Bewegungen beider Verriegelungshebel symmetrisch zueinander verlaufen.

Die Merkmale des Anspruchs 3 sind auf eine weitere Ausgestaltung des eingangs genannten Übertragungsmechanismus gerichtet, hier die konstruktive Ausbildung der Verbindung zwischen dem Antrieb, dem Unterteil und der Kulissenplatte. Letztere Verbindung ist durch eine Kurvennut in der Kulissenplatte gekennzeichnet, welche in Funktion tritt, sobald während der Überführung in die Schließstellung das Ende der Schwenkbewegung der Verriegelungshebel erreicht ist, so dass eine über diesen Zustand hinausgehende weitere Drehbewegung des Antriebs zu einer Verschiebung der Kulissenplatte bis in ihre durch eine Anlage an einem Anschlag gekennzeichnete untere Position führt.

Die Merkmale der Ansprüche 4 und 5 sind auf weitere konstruktive Konkretisierungen gerichtet. Das eingangs genannte Schlossgehäuse nimmt hiernach in der Öffnungsstellung sämtliche Funktionselemente des Schlosses einschließlich der Verriegelungshebel auf.

Die Merkmale des Anspruchs 6 sind auf die nähere Ausgestaltung der zur Darstellung der von der Bewegung des Oberteils abhängigen zwangsgeführten Schwenkbewegung der Verriegelungshebel gerichtet. Man erkennt, dass die Überführungsbewegung der Verriegelungshebel zweistufig angelegt ist, nämlich aus einem ersten Teil besteht, der eine ausschließliche Verschiebebewegung ohne eine Schwenkkomponente beinhaltet, und einem zweiten Teil, der zusätzlich eine Schwenkbewegung einbezieht. Der erste Teil wird dazu benutzt, die Verriegelungshebel durch die Öffnungen des Schlossgehäuses sowie des Deckels zu führen.

Die Merkmale der Ansprüche 7 bis 10 sind auf weitere Ausgestaltungen des Deckelschlosses mit Hinblick auf eine mechanische Begrenzung des Verschiebeweges der kulissenplatte sowie die elektrische Signalisierung der Öffnungsstellung sowie der Schließstellung gerichtet.

Die Erfindung wird im Folgenden unter Bezugnahme auf die beiliegenden Zeichnungen näher erläutert werden. Es zeigen:
Fig. 1 eine Laborzentrifuge in perspektivischer Darstellung unter teilweiser Auslassung des Gehäuses;
Fig. 2 ein Deckelschloss einer Laborzentrifuge in perspektivischer vorderseitiger Ansicht in der Öffnungsstellung;
Fig. 3 das Deckelschloss gemäß Fig. 2 in perspektivischer rückseitiger Ansicht;
Fig. 4 das Deckelschloss gemäß Fig. 2 in ebener vorderseitiger Ansicht;
Fig. 5 das Deckelschloss gemäß Fig. 2 in ebener rückseitiger Ansicht;
Fig. 6 eine erste Zwischenstellung des Deckelschlosses gemäß Fig. 2 in ebener Ansicht bei der Überführung in die Schließstellung;
Fig. 7 eine zweite Zwischenstellung des Deckelschlosses gemäß Fig. 2 in ebener Ansicht bei der Überführung in die Schließstellung;
Fig. 8 die Schließstellung des Deckelschlosses gemäß Fig. 2 in perspektivischer vorderseitiger Ansicht;
Fig. 9 die Schließstellung des Deckelschlosses gemäß Fig. 2 in ebener, vorderseitiger Ansicht;
Fig. 10 die Schließstellung des Deckelschlosses gemäß Fig. 2 in ebener, rückseitiger Ansicht;
Fig. 11 die'Schließstellung des Deckelschlosses gemäß Fig. 2 in perspektivischer rückseitiger Ansicht.

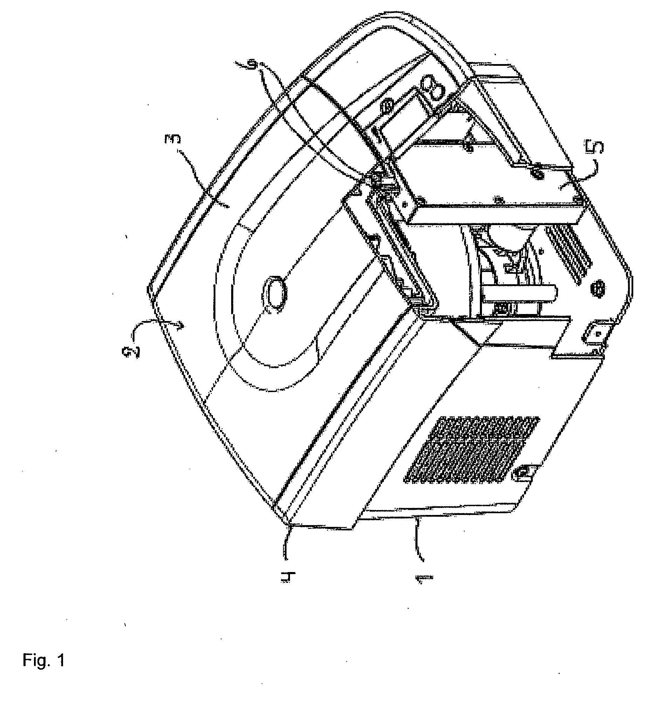

Mit 1 ist in Fig. 1 das Gehäuse einer Laborzentrifuge bezeichnet, welches durch einen, in seiner Oberseite 2 angeordneten Deckel 3 schließbar ist, der in an sich bekannter Weise um eine entlang einer rückseitigen Kante 4 verlaufende horizontale Achse schwenkbar an dem Gehäuse 1 angelenkt ist. Ein Deckelschloss 5 ist innerhalb des Gehäuses 1 fest angeordnet und wirkt in einer noch näher zu beschreibenden Weise über Verriegelungshebel 6 mit dem Deckel 3 zusammen, um diesen insbesondere in der Betriebsphase der Zentrifuge gesichert in der Schließstellung zu halten.

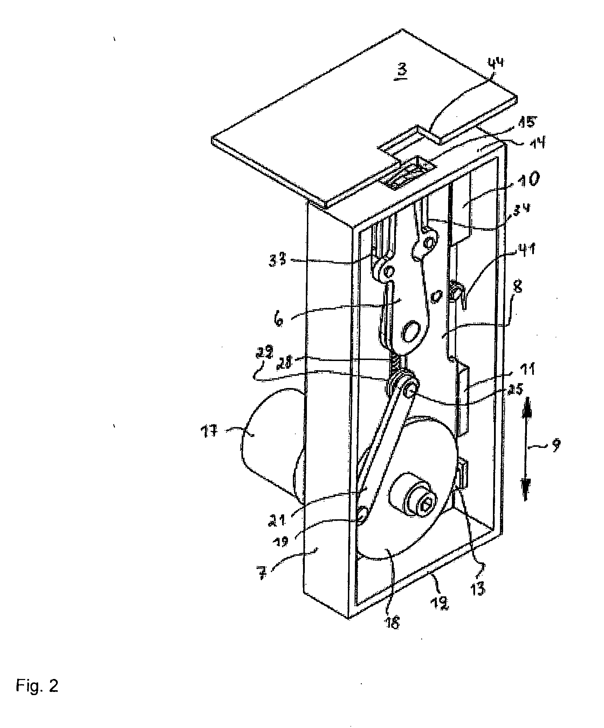

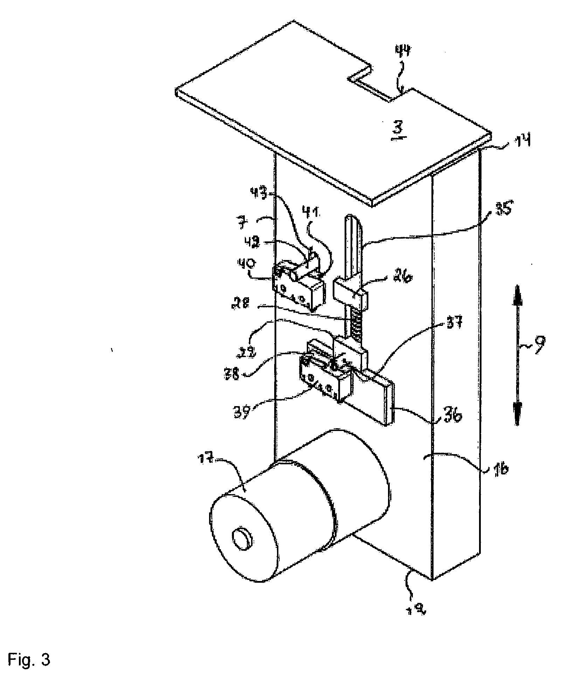

Die Beschaffenheit des Deckelschlosses 5 wird im Folgenden zunächst unter Bezugnahme auf die Fig. 2 bis 5 näher erläutert werden, welche dessen Öffnungsstellung zeigen, wobei in allen Zeichnungsfiguren gleiche Funktionselemente in gleicher Weise beziffert sind.

Das Deckelschloss 5 besteht aus einem in der Ansicht rechteckigen Schlossgehäuse 7, innerhalb welchem eine Kulissenplatte 8 vertikal, dass heißt parallel zu dessen längeren Seiten in Richtung der Pfeile 9 verschiebbar aufgenommen ist. Auf eine Darstellung der vorderseitigen Abdeckung des Schlossgehäuses 7 ist aus Gründen der zeichnerischen Einfachheit verzichtet worden.

Mit 10, 11, sind jeweils paarweise einander gegenüberliegend innerhalb des Schlossgehäuses 7 auf dessen Seitenwandungen angeordnete Gleitplatten bezeichnet, die gehäusefest angeordnet sind und eine seitliche Führung für die Kulissenplatte 8 bilden.

In Richtung auf eine bodenseitige Querwandung 12 des Schlossgehäuses 7 hin ist die Verschiebbarkeit der Kulissenplatte 8 durch einen stegartigen Anschlag 13 begrenzt, der sich zwischen den Seitenwandungen parallel zu der Querwandung 12 erstreckt und gehäusefest angeordnet ist.

In der oberseitigen Querwandung 14 des Schlossgehäuses 7 befindet sich mittig eine Öffnung 15, deren Zweck im Folgenden noch erläutert werden wird.

Auf der Rückwand 16 des Schlossgehäuses 7 ist ein Elektromotor 17 angeordnet, dessen sich durch die Rückwand 16 hindurch erstreckende Abtriebswelle mit einer Exzenterscheibe 18 innerhalb des Schlossgehäuses 7 drehfest verbunden ist. Mit 19 ist ein Bolzen bezeichnet, der gelenkig in eine Bohrung der Exzenterscheibe 18 eingesetzt ist und gleichzeitig in einer Kurvennut 20 der Kulissenplatte 8 aufgenommen ist. Der Bolzen 19 trägt das eine Ende eines Exzenterhebels 21, dessen anderes Ende mittels eines Bolzens 25 gelenkig mit dem in einer sich parallel zu den Pfeilen 9 erstreckenden geradlinigen Ausnehmung 23 geführten Unterteil 22 eines Verriegelungsmechanismus 24 in Verbindung steht.

Der Verriegelungsmechanismus 24 besteht aus zwei, in einem Oberteil 26 um eine gemeinsame, sich parallel zu dem Bolzen 19 und der Öffnung 15 erstreckende Achse 27 schwenkbar angeordneten Verriegelungshebeln 6, wobei das Oberteil 26 über eine Druckfeder 28 mit dem Unterteil 24 in Verbindung steht und gleichermaßen in der Ausnehmung 23 aufgenommen ist.

Mit 29, 30 sind an den Verriegelungshebeln 6 seitlich angeordnete Lager für Bolzen 31, 32 bezeichnet, die mit in die Kulissenplatte 8 eingeformten Kurvennuten 33, 34 im Eingriff stehen, die sich symmetrisch bezüglich einer vertikalen Mittelebene des Schlossgehäuses 7 bzw. der Ausnehmung 23 erstrecken.

Sowohl das Unterteil 22 als auch das Oberteil 26 erstrecken sich durch eine Ausnehmung 35 der Rückwand 16 des Schlossgehäuses 7 hindurch, wobei die Bewegung des Unterteils 22 in Richtung auf die untere Querwandung 12 hin durch einen Anschlag 36 begrenzt ist. An dem aus der Rückwand herausragenden Teil des Unterteils 22 ist ein Schaltnocken 37 angeformt, der über eine Feder 38 mit einem Schalter 39 in Wirkverbindung steht.

Mit 40 ist ein weiterer, auf der Rückwand 16 angeordneter Schalter bezeichnet, der über eine Feder 41 mit einem Schaltnocken 42 in Wirkverbindung steht, der seinerseits durch eine Ausnehmung 43 der Rückwand 16 hindurchgeführt ist und mit der Kulissenplatte 8 in fester Verbindung steht.

Das System der Schalter 39, 40, die mittels der ihnen jeweils zugeordneten Schaltnocken 37, 42 über die Federn 38, 41 betätigt werden, steht über eine nicht dargestellte Steuerungseinrichtung mit dem Elektromotor 17 in Verbindung und dient in einer im Folgenden noch zu erläuternden Weise der Steuerung des Verriegelungsmechanismus 24 zwischen dessen Öffnungs- und dessen Schließ-Stellung.

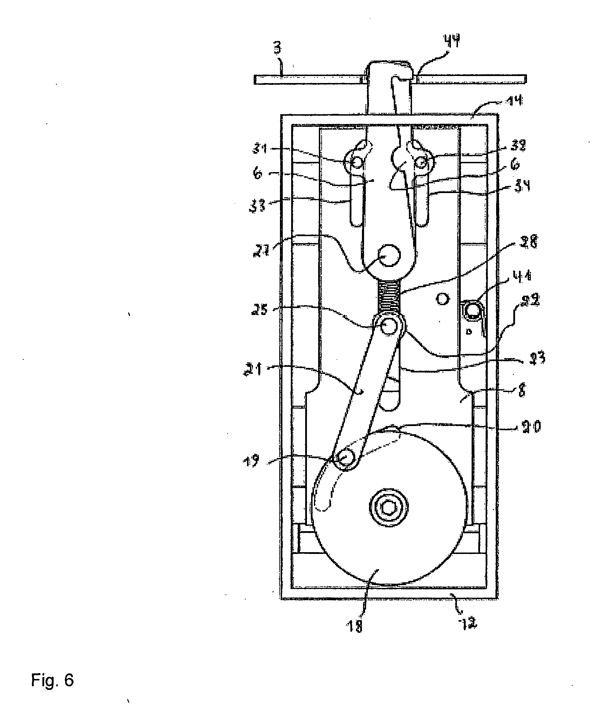

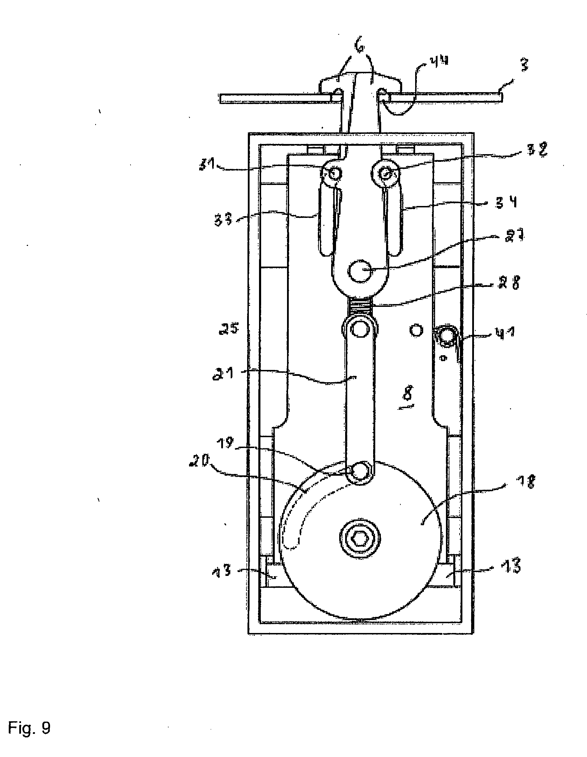

Unter Bezugnahme auf die Figuren 6 bis 11 wird nunmehr die Wirkungsweise des Deckelschlosses während der Überführung von der in den Figuren 2 bis 5 dargestellten Öffnungsstellung in die Schließstellung erläutert.

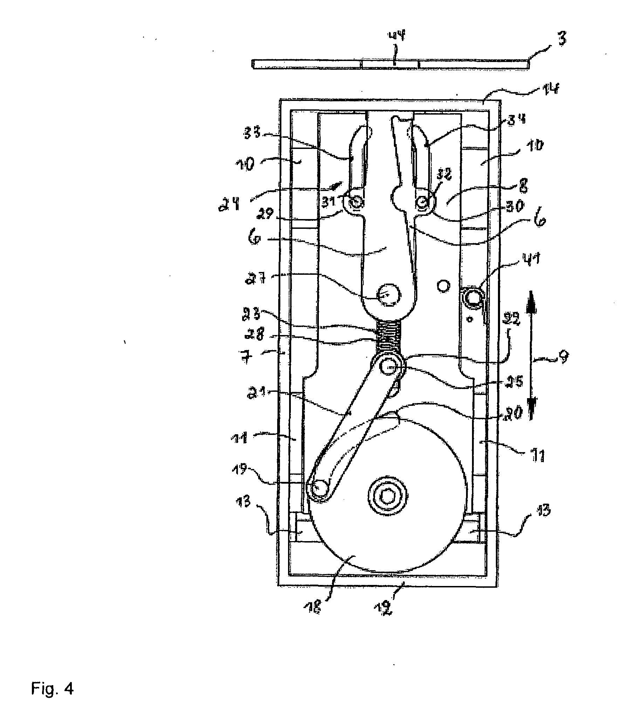

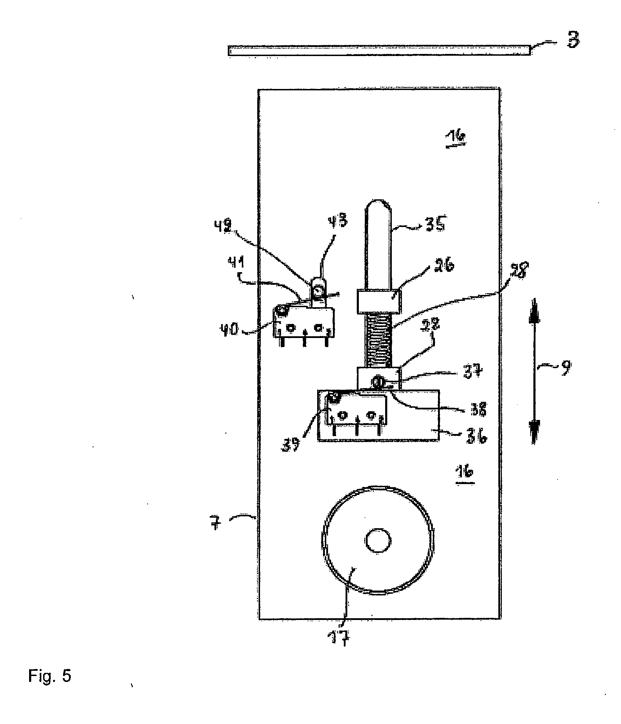

Die in den Figuren 4 und 5 dargestellte Öffnungsstellung ist dadurch gekennzeichnet, dass das Unterteil 22 an dem Anschlag 36 anliegt und somit eine weitere Abwärtsbewegung blockiert ist. Die Druckfeder 28 ist entspannt und es befindet sich der Bolzen 19 der Exzenterscheibe 18 in einer Anlage an dem einen Ende der Kurvennut 20. Die beiden Verriegelungshebel 6 sind in dieser Stellung mit der Maßgabe gehalten, dass ihren hakenartigen freien Enden durch die Öffnung 15 in der oberseitigen Querwandung 14 hindurch führbar sind. Die Kulissenplatte 8 wird unter anderem durch die als Torsionsfeder ausgebildete Feder 41 in ihrer obersten Position gehalten.

Durch Ansteuerung des Elektromotors 17 wird nunmehr die Exzenterscheibe 18 im Uhrzeigersinn gedreht, wobei diese Drehbewegung über den Exzenterhebel 21 in eine Aufwärtsbewegung des Unterteils 22 und damit des Verriegelungsmechanismus 24 umgesetzt wird. Die Verriegelungshebel 6 bleiben bezüglich ihrer gemeinsamen Achse 27 zunächst in der Ausgangslage, so dass sie durch die Öffung 15 und auch durch eine Öffnung 44 des Deckels 3 hindurch geführt werden können. Dies wird durch eine Parallelität der Führungsnuten 33, 34 bezüglich einer durch die Ausnehmung 23 verlaufenden vertikalen Mittelebene während des ersten Teils der Aufwärtsbewegung des Verriegelungsmechanismus 24 erreicht. Fig. 6 zeigt eine Phase, in der die beiden Verriegelungshebel 6 gerade durch die Öffnung 44 des Deckels 3 hindurchgeführt worden sind.

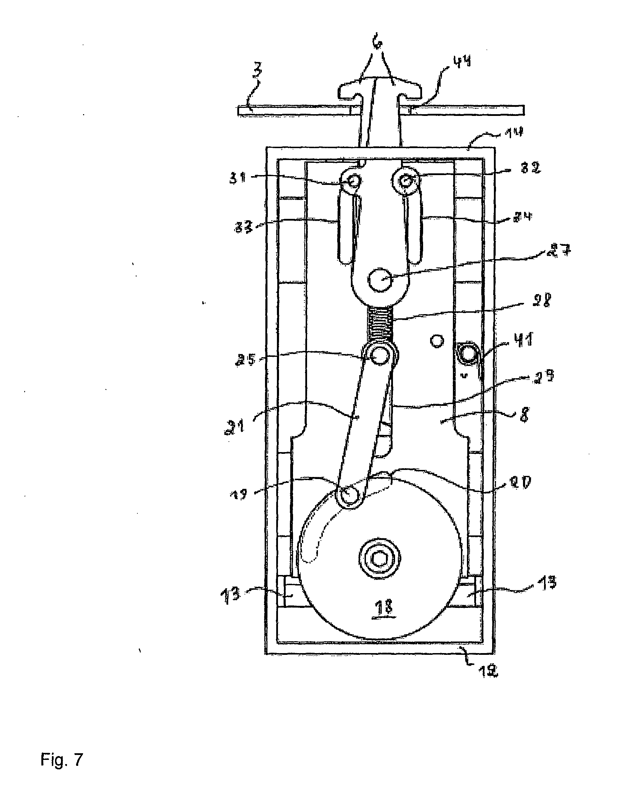

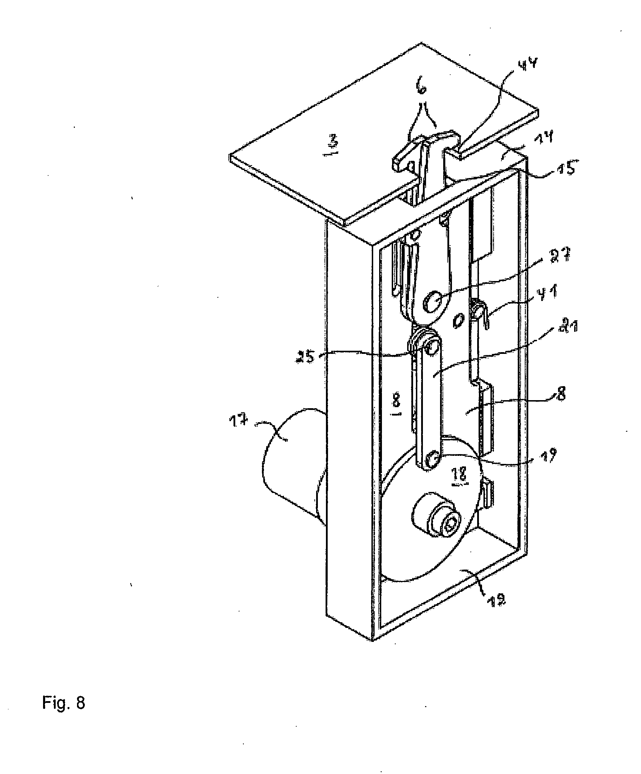

Gemäß Fig. 7 haben die Verriegelungshebel 6 während der weiteren Aufwärtsbewegung eine symmetrische gegenläufige, auswärts gerichtete Schwenkung um ihre gemeinsame Achse 27 ausgeführt, und zwar aufgrund der Zwangsführung ihrer Bolzen 31, 32 entlang der Führungsnuten 33, 34. Sie übergreifen nunmehr die Berandungen der Öffnung 44 und befinden sich in einer für eine formschlüssige Verriegelung geeigneten Position. Da die Bolzen in der in Fig. 7 gezeigten Phase an den Enden der Führungsnuten 33, 34 angelangt sind, ist eine weitere Drehung der Exzenterscheibe 18 mit einer Kompression der Druckfeder 28 und einer durch diese bewirkten Verschiebung der Kulissenplatte 8 in Richtung auf die untere Querwandung 12 hin verbunden, und zwar bis der Anschlag 13 erreicht ist. Diesen Zustand zeigen die Figuren 8 bis 11, wobei die hakenartigen freien Enden der Verriegelungshebel 6 spielfrei fest an der Berandung der Öffnung 44 anliegen, so dass nunmehr die Schließstellung dargestellt ist.

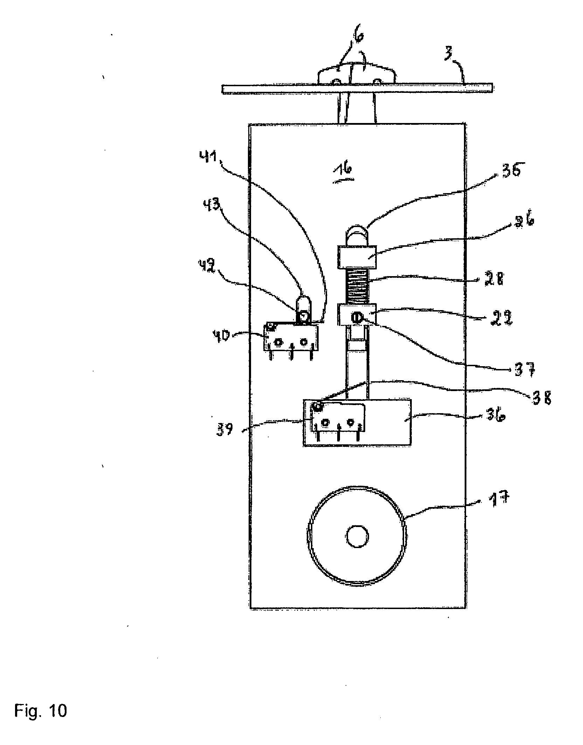

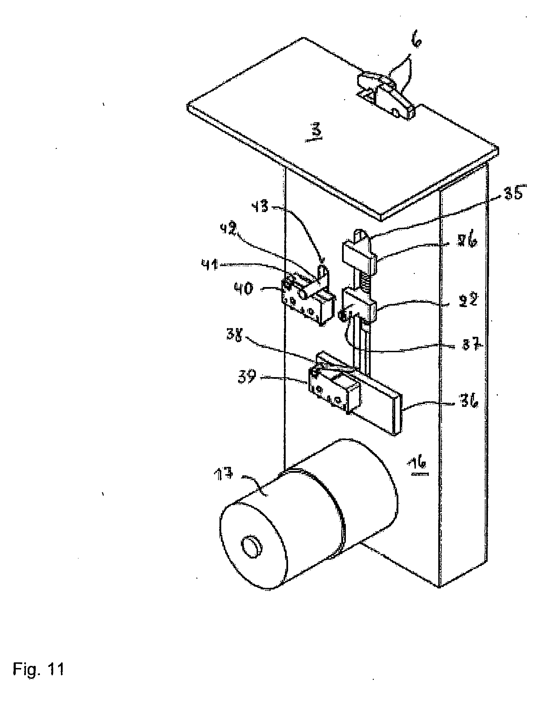

Wie die Figuren 10 und 11 erkennen lassen, ist infolge der Abwärtsbewegung der Kulissenplatte 8 über deren Schaltnocken 42 und den Schalter 40 die Schließstellung des Deckelschlosses signalisierbar.

In umgekehrter Reihenfolge kann ausgehend von der Schließstellung durch entsprechende Ansteuerung des Elektromotors 17 die Öffnungsstellung erreicht werden, die ihren Abschluss findet, sobald durch den Schaltnocken 37 der Öffnungszustand signalisiert wird und das Unterteil 22 an dem Anschlag 36 anliegt wie in den Figuren 2 bis 5 gezeigt.

Man erkennt, dass in der Öffnungsstellung des Deckelschlosses sämtliche Elemente des eingangs genannten Übertragungsmechanismus einschließlich der Verriegelungshebel 6 in dem Schlossgehäuse 7 geschützt aufgenommen sind. Die Exzenterscheibe 18 ist wie in den Figuren 2, 4, 6, 8, 10 dargestellt, mit einem Sechskantprofil ausgerüstet, welches eine Notenriegelung bildet.

### Bezugszeichenliste:

- 1.: Gehäuse
- 2.: Oberseite
- 3.: Deckel
- 4.: Kante
- 5.: Deckelschloss
- 6.: Verriegelungshebel
- 7.: Schlossgehäuse
- 8.: Kulissenplatte
- 9.: Pfeile
- 10.: Gleitplatte
- 11.: Gleitplatte
- 12.: Querwandung
- 13.: Anschlag
- 14.: Querwandung
- 15.: Öffnung
- 16.: Rückwand
- 17.: Elektromotor
- 18.: Exzenterscheibe
- 19.: Bolzen
- 20.: Kurvennut
- 21.: Exzenterhebel
- 22.: Unterteil
- 23.: Ausnehmung
- 24.: Verriegelungsmechanismus
- 25.: Bolzen
- 26.: Oberteil
- 27.: Achse
- 28.: Druckfeder
- 29.: Lager
- 30.: Lager
- 31.: Bolzen
- 32.: Bolzen
- 33.: Kurvennut
- 34.: Kurvennut
- 35.: Ausnehmung
- 36.: Anschlag
- 37.: Schaltnocken
- 38.: Feder
- 39.: Schalter
- 40.: Schalter
- 41.: Feder
- 42.: Schaltnocken
- 43.: Ausnehmung
- 44.: Öffnung

## Patentansprüche

1. Deckelschloss zum Verriegeln des Deckels (3) des Gehäuses (1) einer Laborzentrifuge mit zwei gegenläufig zwischen einer Öffnungsstellung und einer Schließstellung schwenkbar angeordneten Verriegelungshebeln (6), einem in der Schließstellung zum Eingriff mit den Verriegelungshebeln (6) bestimmten Strukturelement des Deckels (3), einem Antrieb und einem zur Umsetzung einer Drehbewegung des Antriebs in eine Öffnungs- oder Schließbewegung der Verriegelungshebel (6) bestimmten Übertragungsmechanismus, **dadurch gekennzeichnet, dass** der Übertragungsmechanismus in einem, auf seiner, dem genannten Strukturelement zugekehrten Seite eine Öffnung (15) aufweisenden, eine Kulissenplatte (8) aufnehmenden Schlossgehäuse (7) angeordnet ist, dass beide Verriegelungshebel (6) um eine gemeinsame Achse (27) schwenkbar in einem, in einer Ausnehmung (23) der Kulissenplatte (8) verschiebbar angeordneten Oberteil (26) gelagert sind, dass sich die Ausnehmung (23) in Richtung auf die Öffnung (15) und das genannte Strukturelement hin erstreckt, eine geradlinige Führung für das Oberteil (26) bildend, dass die Schwenkbewegung der Verriegelungshebel (6) zwischen der Öffnungs- und der Schließställung nach Maßgabe der Verschiebung des Oberteils (26) relativ zu der Kulissenplatte (8) zwangsgeführt und wegbegrenzt eingerichtet ist, dass in der Ausnehmung (23) unter Zwischenanordnung einer Druckfeder (28) ein mit dem Antrieb in Wirkverbindung stehendes Unterteil (22) angeordnet ist, und dass die Kulissenplatte (8) parallel zu der Ausnehmung (23) innerhalb des Schlossgehäuses (7) wegbegrenzt verschiebbar angeordnet ist, unter Kompression der Druckfeder (28) in ihrer einen Endlage anliegend die Schließstellung sichernd.

2. Deckelschloss nach Anspruch 1, **dadurch gekennzeichnet, dass** an jedem der beiden Verriegelungshebel (6) ein mit einer Kurvennut (33, 34) der Kulissenplatte (8) im Eingriff stehender Bolzen (31, 32) mit Abstand von der Achse (27) angeordnet ist, dass das eine Ende einer jeden Kurvennut (33, 34) der Schließstellung und das andere der Öffnungsstellung zugeordnet ist und dass beide Kurvennuten (33, 34) symmetrisch zu einer in der Ausnehmung (23) verlaufenden Mittelebene des Schlossgehäuses (7) angeordnet sind.

3. Deckelschloss nach Anspruch 1 oder 2, **dadurch gekennzeichnet, dass** der Antrieb über eine Exzenterscheibe (18) und einen Exzenterhebel (21) mit dem Unterteil (22) in Verbindung steht und dass ein durch die Exzenterscheibe (18) getragener Bolzen (19) mit einer Kurvennut (20) der Kulissenplatte (8) im Eingriff steht, wobei die Kurvennut (20) sowie die Kurvennuten (33, 34) mit der Maßgabe positioniert und bemessen sind, dass nachdem die Bolzen (31, 32) während der Überführung in die Schließstellung die Enden der Kurvennuten (33, 34) erreicht haben, eine weitere Drehbewegung des Antriebs eine Verschiebebewegung der Kulissenplatte (8) unter Kompression der Druckfeder (28) in Richtung von der Öffnung (15) fort generiert.

4. Deckelschloss nach einem der Ansprüche 1 bis 3, **dadurch gekennzeichnet, dass** das genannte Strukturelement durch eine Öffnung (44) des Deckels (3) dargestellt ist.

5. Deckelschloss nach einem der Ansprüche 1 bis 4, **dadurch gekennzeichnet, dass** in der Öffnungsstellung die Verriegelungshebel (6) sich in einer, in das Schlossgehäuse (7) zurückgezogenen Position befinden.

6. Deckelschloss nach einem der Ansprüche 2 bis 5, **dadurch gekennzeichnet, dass** die Kurvennuten (33, 34) in Abhängigkeit von der Lage der Öffnungen (15, 44) mit der Maßgabe eingerichtet sind, dass eine Verschiebebewegung des Oberteils (26) während eines ersten Teils der Überführung von der Öffnungsstellung die Schließstellung, eine Einführung der Verriegelungshebel (6) in die Öffnung (44) ermöglichend parallel zueinander verlaufen und während eines zweiten Teils dieser Überführung einwärts in Richtung auf einander zu verlaufen, die Verriegelungshebel (6) in eine für einen Eingriff mit einer Berandung der Öffnung (44) bestimmte Stellung schwenkend.

7. Deckelschloss nach einem der Ansprüche 1 bis 6, **dadurch gekennzeichnet, dass** der Verschiebebewegung der Kulissenplatte (8) ein Anschlag (13) zugeordnet ist.

8. Deckelschloss nach einem der Ansprüche 1 bis 7, **dadurch gekennzeichnet, dass** der Bewegung des Unterteils (22) in Richtung auf die die Öffnungsstellung hin ein Anschlag (36) zugeordnet ist.

9. Deckelschloss nach einem der Ansprüche 1 bis 8 **dadurch gekennzeichnet, dass** an der Kulisssenplatte (8) ein Schaltnocken (42) angeordnet ist, der in Verbindung mit einem Schalter (40) zur Signalisierung der Schließstellung eingerichtet ist.

10. Deckelschloss nach einem der Ansprüche 1 bis 9, **dadurch gekennzeichnet, dass** an dem Unterteil (22) ein Schaltnocken (37) angeordnet ist, der in Verbindung mit einem Schalter (39) zur Signalisierung der Öffnungsstellung eingerichtet ist.

## Claims

1. Cover lock for locking the cover (3) of the housing (1) of a laboratory centrifuge having two locking levers (6) disposed to be pivotable in opposite directions between an open position and a closed position, having a structural element of the cover (3) intended for engagement with the locking levers (6) in the closed position, having a drive and having a transmission mechanism intended for converting a rotary movement of the drive into an opening or closing movement of the locking levers (6), **characterised in that** the transmission mechanism is disposed in a lock housing (7) having an opening (15) on its side which faces said structural element and receiving a back plate (8), that the two locking levers (6) are mounted to be pivotable about a common axis (27) in an upper part (26) which is displaceably disposed in an aperture (23) in the back plate (8), that the aperture (23) extends in the direction of the opening (15) and of said structural element, forming a straight guide for the upper part (26), that the pivoting movement of the locking levers (6) between the open position and closed position is arranged in a forcibly guided and path-limited manner according to the displacement of the upper part (26) relative to the back plate (8), that a lower part (22) operatively connected to the drive is disposed in the aperture (23) with interpositioning of a compression spring (28), and that the back plate (8) is disposed to be displaceable in a path-limited manner in parallel with the aperture (23) within the lock housing (7) under compression of the compression spring (28), securing the closed position by fitting closely in one of its end positions.

2. Cover lock as claimed in claim 1, **characterised in that** a bolt (31, 32) engaged with a curved groove (33, 34) in the back plate (8) is disposed spaced apart from the axis (27) on each of the two locking levers (6), that one end of each curved groove (33, 34) is allocated to the closed position and the other to the open position, and that both curved grooves (33, 34) are disposed symmetrically with respect to a middle plane of the lock housing (7) extending in the aperture (23).

3. Cover lock as claimed in claim 1 or 2, **characterised in that** the drive is connected to the lower part (22) via an eccentric disc (18) and an eccentric lever (21) and that a bolt (19) carried by the eccentric disc (18) is engaged with a curved groove (20) in the back plate (8), wherein the curved groove (20) and the curved grooves (33, 34) are positioned and dimensioned with the proviso that, after the bolts (31, 32) have reached the ends of the curved grooves (33, 34) during transfer into the closed position, a further rotary movement of the drive generates a displacement movement of the back plate (8) under compression of the compression spring (28) in the direction away from the opening (15).

4. Cover lock as claimed in any one of claims 1 to 3, **characterised in that** said structural element is formed by an opening (44) in the cover (3).

5. Cover lock as claimed in any one of claims 1 to 4, **characterised in that** in the open position the locking levers (6) are located in a position withdrawn into the lock housing (7).

6. Cover lock as claimed in any one of claims 2 to 5, **characterised in that** the curved grooves (33, 34) are arranged in dependence upon the position of the openings (15, 44) with the proviso that a displacement movement of the upper part (26) during a first part of the transfer from the open position into the closed position, extend in parallel with one another, permitting insertion of the locking levers (6) into the opening (44), and during a second part of this transfer extend inwards in the direction towards one another , pivoting the locking levers (6) into a position intended for engagement with an edge of the opening (44).

7. Cover lock as claimed in any one of claims 1 to 6, **characterised in that** the displacement movement of the back plate (8) is allocated a stop (13).

8. Cover lock as claimed in any one of claims 1 to 7, **characterised in that** the movement of the lower part (22) in the direction towards the open position is allocated a stop (36).

9. Cover lock as claimed in any one of claims 1 to 8, **characterised in that** a switching cam (42) is disposed on the back plate (8) and is arranged to signal the closed position in conjunction with a switch (40).

10. Cover lock as claimed in any one of claims 1 to 9, **characterised in that** a switching cam (37) is disposed on the lower part (22) and is arranged to signal the open position in conjunction with a switch (39).

## Revendications

1. Fermeture de couvercle pour le verrouillage du couvercle (3) du boîtier (1) d'une centrifugeuse de laboratoire avec deux leviers de verrouillage (6) disposés de manière pivotante en sens opposé entre une position d'ouverture et une position de fermeture, un élément structurel du couvercle (3) destiné, dans la position de fermeture, à l'engagement avec les leviers de verrouillage (6), un entraînement et un mécanisme de transmission destinés à la conversion d'un mouvement de rotation de l'entraînement en un mouvement d'ouverture ou de fermeture des leviers de verrouillage (6), **caractérisée en ce que** le mécanisme de transmission est disposé dans un boîtier de fermeture (7) recevant une plaque coulissante (8), présentant, sur son côté tourné vers l'élément structurel cité, une ouverture (15), **en ce que** les deux leviers de verrouillage (6) sont logés de manière pivotante autour d'un axe commun (27) dans une partie supérieure (26) disposée de manière mobile dans un évidement (23) de la plaque coulissante (8), **en ce que** l'évidement (23) s'étend en direction de l'ouverture (15) et de l'élément structurel cité, formant un guidage linéaire pour la partie supérieure (26), **en ce que** le mouvement pivotant des leviers de verrouillage (6) est conçu de sorte à être guidé à force, et limité dans sa course entre la position d'ouverture et la position de fermeture suivant le déplacement de la partie supérieure (26) par rapport à la plaque coulissante (8), **en ce que** dans l'évidement (23), une partie inférieure (22) se trouvant en liaison active avec l'entraînement est disposée en intercalant un ressort de compression (28), et **en ce que** la plaque coulissante (8) est disposée de manière à se déplacer en étant limitée dans sa course parallèlement à l'évidement (23) dans le boîtier de fermeture (7), reposant sous la compression du ressort de compression (28) dans sa position finale et bloquant la position de fermeture.

2. Fermeture de couvercle selon la revendication 1, **caractérisée en ce qu'**un boulon (31, 32) en engagement avec une rainure de came (33, 34) de la plaque coulissante (8) est disposé à distance de l'axe (27) sur chacun des deux leviers de verrouillage (6), **en ce qu'**une extrémité de chaque rainure de came (33, 34) est associée à la position de fermeture et l'autre extrémité est associée à la position d'ouverture et **en ce que** les deux rainures de came (33, 34) sont disposées de manière symétrique à un plan médian s'étendant dans l'évidement (23) du boîtier de fermeture (7).

3. Fermeture de couvercle selon la revendication 1 ou 2, **caractérisée en ce que** l'entraînement est en liaison grâce à un disque d'excentrique (18) et un levier d'excentrique (21) avec la partie inférieure (22) et **en ce qu'**un boulon (19) porté par le disque d'excentrique (18) est en engagement avec une rainure de came (20) de la plaque coulissante (8), la rainure de came (20) ainsi que les rainures de came (33, 34) étant positionnées et dimensionnées afin qu'après que les boulons (31, 32) ont atteint pendant le transfert dans la position de fermeture les extrémités des rainures de came (33, 34), un autre mouvement de rotation de l'entraînement génère un mouvement coulissant de la plaque coulissante (8) sous compression du ressort de compression (28) loin de l'ouverture (15).

4. Fermeture de couvercle selon l'une quelconque des revendications 1 à 3, **caractérisée en ce que** l'élément structurel cité est constitué par une ouverture (44) du couvercle (3).

5. Fermeture de couvercle selon l'une quelconque des revendications 1 à 4, **caractérisée en ce que** dans la position d'ouverture, les leviers de verrouillage (6) se trouvent dans une position en retrait dans le boîtier de fermeture (7).

6. Fermeture de couvercle selon l'une quelconque des revendications 2 à 5, **caractérisée en ce que** les rainures de came (33, 34) sont aménagées en fonction de la position des ouvertures (15, 44), à condition qu'un mouvement coulissant de la partie supérieure (26), pendant une première partie du transfert de la position d'ouverture à la position de fermeture, permettant une introduction des leviers de verrouillage (6) dans l'ouverture (44), s'étende parallèlement l'un à l'autre et s'étende vers l'intérieur l'un vers l'autre pendant une seconde partie de ce transfert, pivotant les leviers de verrouillage (6) dans une position destinée à un engagement avec un bord de l'ouverture (44).

7. Fermeture de couvercle selon l'une quelconque des revendications 1 à 6, **caractérisée en ce qu'**une butée (13) est associée au mouvement coulissant de la plaque coulissante (8).

8. Fermeture de couvercle selon l'une quelconque des revendications 1 à 7, **caractérisée en ce qu'**une butée (36) est associée au mouvement de la partie inférieure (22) en direction de la position d'ouverture.

9. Fermeture de couvercle selon l'une quelconque des revendications 1 à 8, **caractérisée en ce qu'**une came de commutation (42) est disposée sur la plaque coulissante (8), laquelle est aménagée en liaison avec un commutateur (40) pour la signalisation de la position de fermeture.

10. Fermeture de couvercle selon l'une quelconque des revendications 1 à 9, **caractérisée en ce qu'**une came de commutation (37) est disposée sur la partie inférieure (22), laquelle est aménagée en liaison avec un commutateur (39) pour la signalisation de la position d'ouverture.
